# EUROPEAN PATENT SPECIFICATION

(11) **EP 2 259 912 B1**
(45) Date of publication and mention of the grant of the patent: **15.02.2012**
(21) Application number: 09720622.1
(22) Date of filing: 25.02.2009
(51) Int. Cl.: B29C 67/00

(54) **ADDITIVE LAYER MANUFACTURING TECHNIQUE AND APPARATUS THEREFOR**
VERFAHREN ZUM SCHICHTWEISEN AUFBAU EINES WERKSTÜCKS UND VORRICHTUNG DAFÜR
PROCEDE DE FABRICATION D'UNE PIECE PAR COUCHES SUCCESSIVES ET APPAREIL ASSOCIE

(30) Priority: 10.03.2008 GB 0804390
(43) Date of publication of application: 15.12.2010
(73) Proprietor: University of Exeter, Exeter, Devon EX4 4QJ (GB)
(72) Inventor: BEARD, Mark, Alan, Devonshire EX8 3DS (GB)
(74) Representative: Bailey, Richard Alan
(86) International application number: PCT/GB2009/000495
(87) International publication number: WO 2009/112799

(56) References cited:
- EP-A- 1 815 936
- US-B1- 6 730 256

## Description

This invention relates to a manufacturing technique, in particular to an additive layer manufacturing technique and to an apparatus to perform such a technique.

Additive layer production techniques are well known and are in frequent use in the rapid manufacture of prototype components. They are also becoming used in rapid manufacturing techniques for use in the production of final components. A typical rapid prototyping additive layer manufacturing technique involves providing a layer of a material from which a product is to be manufactured upon a support, heating the material to a temperature close to, but below, its melting point, and using a computer controlled laser to scan the layer to irradiate and heat only the parts of the layer of material which are desired to form part of the product, thereby melting or sintering the parts of the layer which are desired to form part of the product, leaving those parts of the layer not intended to form part of the product in powder form. Once the layer of material has been treated in this manner, another layer of material is applied over the initial layer, and the laser treatment process repeated. It will be appreciated that by repeating the process outlined hereinbefore the product can be built up in layers until the product is completed. Once completed, the non-sintered powder can be removed from the product.

Although the technique outlined hereinbefore makes use of a powdered material, heating being used to form the final product, it will be appreciated that this need not always be the case. For example, a liquid resin material may be used instead of a powder. Where the material is photo-curable, then rather than heating the material, curing may be achieved by appropriate illumination thereof.

Similar techniques can be used in the rapid manufacture of final components as well as in the rapid production of prototypes.

The process permits component parts to be manufactured efficiently, and a wide range of component parts can be manufactured using the same apparatus, simply by appropriate control over the laser or other heat and/or light source to determine which parts of the layer are heated or cured and which parts are not. A number of different materials can be used, for example the process can be used with many polymers, ceramic materials and metals.

Although one form of additive layer manufacturing technique is outlined hereinbefore, a number of variants to the technique are known. For example, techniques are known in which rather than applying an entire layer of material, material is only applied in the areas in which it is required. In such techniques, the material may be applied using spray techniques or using processes very similar to printing processes.

One problem with the use of conventional additive layer manufacturing techniques, particularly when the techniques are being used in the rapid manufacture of final component parts rather than the manufacture of prototypes, is that defects may be present in the finished product which, although possibly acceptable in a prototype, are unacceptable in a final product. The defects may be caused by, for example, over or under irradiation and/or heating of parts of the material, during the manufacturing process, by the laser. Under irradiation may result in, for example, parts of the material still being in powder form, or not fully sintered, rather than having melted or sintered to form a solid, thereby giving rise to weakness and disuniformity in the final product. In order to avoid under irradiation and the associated problems, there may be a tendency to err on the side of caution and irradiate the material to a level greater than is actually necessary to achieve melting or sintering. However, such over irradiation may cause other problems. Depending upon the material being used, over irradiation may cause weaknesses or result in undesirable characteristics in the final product. Determination of how heavily to irradiate the various parts of the product is typically achieved on a trial and error basis until an adequate quality result is produced. Once this has been achieved, further products are manufactured using the same levels of irradiation. Similar problems arise as a result of non-uniform scan speed and laser path length. It will be appreciated that this is wasteful and inefficient. Further, despite adequate quality results being produced, it will be appreciated that quality may not be being optimised.

EP1815936 describes an additive layer manufacturing method comprising applying a material, locally treating the applied material by irradiation of parts thereof using a laser, monitoring a characteristic of the treated applied material using a vibrational spectroscopy technique, applying and locally treating at least further material, and removing untreated material from the treated material. The document also describes an apparatus to perform such a method.

It is an object of the invention to provide an additive layer manufacturing technique in which these disadvantages are of reduced effect.

According to the present invention there is provided an additive layer manufacturing method according to claim 1.

The output of the monitoring operation may be used in controlling, for example, the output power of the laser. Alternatively, it may be used in controlling the dwell time during which a part of the applied material is irradiated. However, it will be appreciated that other parameters used in controlling the irradiation of the applied material may be varied depending upon the output of the monitoring operation.

The vibrational spectroscopy technique is preferably a Raman spectroscopy technique, in which case the applied material is a strong Raman scatterer material.

Such a method is advantageous in that, by using the Raman spectroscopy technique to monitor, for example, the structure of the applied material, the laser can be controlled to heat and/or cure the applied material only until a desired temperature or level of curing has been attained or a desired change in structure has occurred. The closed loop control system so achieved is beneficial in that the quality of the products produced can be optimised without the inefficiencies outlined hereinbefore, under or over irradiation being avoided. Such closed loop control has not previously been possible as real-time information representative of the structure of the product being manufactured has not been available.

Another benefit of the closed loop control is that different levels of treatment can be achieved, in a controlled manner, is different parts of the product. As a result, regions of the final product may be formed with different structural characteristics to one another.

The treatment step is preferably undertaken using the same laser as that used in the Raman spectroscopy technique. However, this need not always be the case and arrangements are possible in which a separate laser is provided for use in the Raman spectroscopy technique to that used in the treatment operation. Where a single laser is used to perform the treatment operation and for use in the Raman spectroscopy technique, it will be appreciated that the laser will be more highly powered than is normal in Raman spectroscopy techniques as, normally, the laser used in the spectroscopy technique will be of sufficiently low power that it will not alter the structure of the material, whereas in accordance with this aspect of the invention, it is the intention that the laser device will cause alteration of the structure of the material.

The strong Raman scatterer material may be of a range of forms. For example it may be of polymeric or ceramic form, or of a biological material. It may be of powdered form, and arranged to melt or partially melt during the treatment operation to form a solid. Alternatively, it may be of liquid form. For example it could comprise a liquid resin. Rather than melting during the treatment operation, the material may be of photo-curable form, the illumination resulting from the irradiation occurring during the treatment operation causing curing of the treated parts of the material. However, a range of other materials are possible without departing from the scope of the invention. If desired, the material may comprise a component which is a weak Raman scatterer, such as a metallic material, which has been doped with a suitable strong Raman scatterer material in order to allow measurement of properties of the applied material. Further, the material need not be uniform throughout the product, for example it may be graded or of mixed form, thus producing a product in which different parts thereof may have different characteristics, or the treatment of some parts of the material may be undertaken in such a manner as to cause non-uniformities in the structure of the finished product. If desired, the material may incorporate fibres, beads or other components.

After treatment of the applied material, for example after heating of the desired parts of a layer thereof, and/or after manufacture of an entire product, other characteristics of the applied material may be sensed by Raman spectroscopy, but with the laser operating at a power chosen so as to avoid significant undesired structural modification of the material. The characteristics which may be sensed in this manner include the orientation and crystallinity of the material, and dimensional information about the product.

Although, as mentioned hereinbefore, the vibrational spectroscopy technique is preferably a Raman spectroscopy technique, this need not always be the case and at least some of the benefits of the invention may be achievable using, for example, a near infrared spectroscopy technique.

The invention further relates to an apparatus for use in the method defined hereinbefore, according to claim 1.

The treatment laser may form part of the spectrometer arrangement. The spectrometer arrangement preferably comprises a Raman spectroscopy arrangement, Raman scattering of light from the treatment laser being used in controlling the operation of the apparatus. Alternatively the Raman spectrometer arrangement may incorporate a separate laser to the treatment laser.

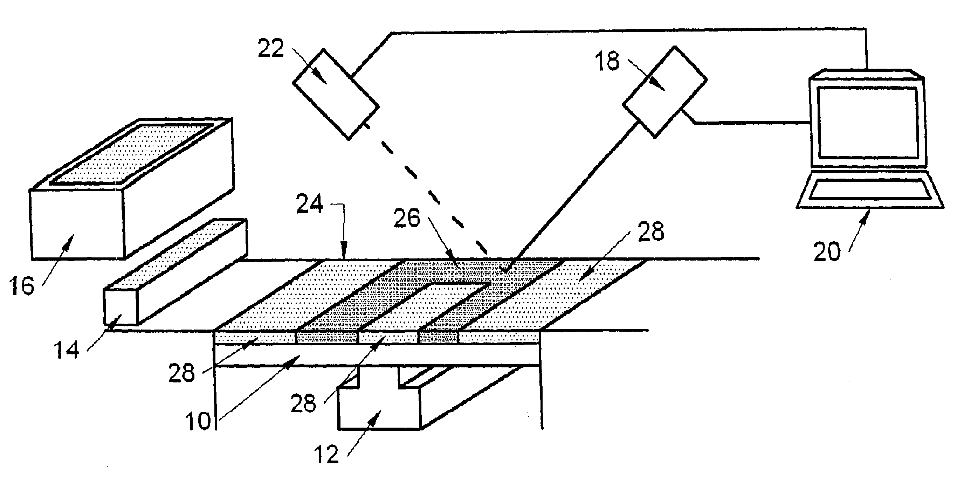

The invention will further be described, by way of example, with reference to the accompanying drawing (Figure 1) which is a diagrammatic representation of an apparatus used in the manufacturing technique of the invention.

Referring to Figure 1 there is illustrated an apparatus for use in an additive layer manufacturing technique, the apparatus being illustrated part way through the manufacture of a product. The apparatus comprises a support table 10 which is movable in the vertical direction by a support mechanism 12. The apparatus further comprises a device 14 operable to apply layers of a strong Raman scatterer product material from a hopper 16 to the table 10, or to material already supported thereby, the layers being of uniform thickness.

A laser device 18 is provided, the laser device 18 being arranged to treat parts of the applied material layer by irradiation thereof to cause heating and melting/sintering thereof. The laser device 18 is arranged to emit a laser beam of monochromatic form, and is able to scan the surface of the layer of material so as to permit irradiation of just selected parts thereof. A computer 20 is provided to control the operation of the laser device 18, the computer being programmed with details of the shape of the product to be manufactured and controlling the operation of the laser device 18 to irradiate just the desired parts of the layer of applied material.

The apparatus further comprises a Raman spectrometer device 22 operable to monitor the frequencies, and in particular frequency shifts, of the laser light scattered from the material so as to permit monitoring of properties thereof. It is well understood that, in such an arrangement, the frequency shifts of the scattered light are representative of physical or structural characteristics or parameters of the material from which the light is scattered. The Raman spectrometer device 22 outputs data representative of one or more parameters of the irradiated material to the computer 20 for use by the computer 20 in controlling the operation of the laser device 18. In this example, the Raman spectrometer device is arranged to output data representative of whether or not the part of the layer being irradiated has sintered or is still in powder form, but data or signals representative of other characteristics or parameters could be sensed if desired.

In use, initially the device 14 is operated to apply a first layer 24 of powdered material from the hopper 16 to the table 10. The layer 24 is of uniform thickness, for example it may have a thickness typically falling in the range of 75 to 100 microns, but it will be appreciated that other layer thicknesses are possible within the scope of the invention. The layer is heated by heater means (not shown) to a temperature close to but below its melting point. The computer 20 controls the operation of the laser device 18 such that the laser device 18 irradiates desired parts 26 of the layer 24, further heating those parts to cause them to melt/sinter, whilst the other parts 28 of the layer 24 are not irradiated and heated, so remain in powder form. Whilst the laser device 18 is irradiating each area of the aforementioned desired parts 26, the Raman spectrometer device 22 monitors the frequency of the laser light scattered from the material in that area and outputs signals to the computer 20. The frequency shifts of the scattered light are indicative of the structure of the material, thus the signals output to the computer are also indicative of the structure of the material and are used by the computer 20 in determining whether the irradiated part of the material has been irradiated and heated to a sufficient degree to achieve a desired material structure, or whether further irradiation and heating is required to achieve the desired material structure, and the computer 20 controls the laser device 18 accordingly. For example, the computer 20 may be used to control the output power of the laser device 18, or the duration or dwell time during which a particular part of the layer 24 is irradiated. However, there may be other parameters which could be controlled by the computer 20 to control the treatment of the material. The frequencies of the scattered light are also representative of the material temperature, and so temperature reading may also be made.

It will be appreciated that such a closed loop control arrangement permits irradiation of all desired parts of the layer to a desired, optimum level. In contrast, in prior arrangements such closed loop control has not been possible as real-time or substantially real-time data representative of the material structure has not been available. In the absence of such information, as outlined hereinbefore, optimisation of the treatment process is not possible and instead the machine operator has had to estimate for how long or at what power treatment should be effected.

The closed loop control may also be used to allow different parts of the product to be treated differently, for example to achieve a product of non-uniform structure.

Once it is determined that sufficient irradiation and heating of all of the desired parts 26 of the layer 24 has been achieved, the table 10 is lowered by a small amount equivalent to the thickness of the layer 24, and a fresh, second layer of powder material is applied over the first layer by the device 14. The laser heating operation as described hereinbefore is repeated to cause melting/sintering of the desired parts of that layer, where appropriate the desired parts becoming melted or sintered to the adjacent parts of the underlying layer. The process is repeated, building up a series of layers, until the entire product has been formed, whereupon the remaining powder material can be removed from around the product.

If desired, before each fresh layer of powder material is applied, but after the heating operation has been completed, a further Raman spectroscopy technique may be undertaken, using the Raman spectrometer device 22, but with the laser device 18 operating at a reduced power output, to allow additional information to be obtained, for example information relating to the orientation and crystallinity of the sintered material may be obtained and information relating to the dimensions of the sintered material may be obtained. In this mode of operation, the reduced power output of the laser device 18 ensures that insufficient additional heating takes place to cause defects in the finished product. A similar operation may be undertaken after melting or sintering of the completed product has been finished to allow stress measurements and/or dimensional measurements to be taken. For example, the dimensions of the final product may be measured.

As mentioned hereinbefore, the strong Raman scatterer material used in the manufacturing technique may be of a range of forms. For example, it may comprise a polymeric, ceramic or biological material. In the arrangement hereinbefore the material is of powdered form, but it will be appreciated that fibres, beads or other components could be incorporated therein, if desired. It may be a blend of two or more materials, and if desired different materials may be used in different parts of the product. If desired, the material may comprise a mixture of a material which is a weak Raman scatterer, for example a metallic material, but mixed or doped with a strong Raman scatterer material. The quantity of strong Raman scatterer material used to dope such a material may be very small.

Rather than use a powdered material, the material may be of liquid form. For example, the support table may be located within a tank containing the liquid material, the support table being lowerable in increments so that layers of liquid of a predetermined depth are presented at the surface for irradiation using the laser. The liquid may comprise, for example, a photo-curable resin material. Where such a material is used, it will be appreciated that illumination of the material, rather than heating thereof, as a result of the operation of the treatment laser causes curing and solidification thereof. In other respects, the process is similar to that set out hereinbefore.

Although a specific additive layer manufacturing technique is described and illustrated herein, it will be appreciated that the invention is not restricted to such a technique and is applicable to a wide range of additive layer manufacturing techniques, including but not restricted to those mentioned hereinbefore. Further, the technique may be used in both rapid manufacturing techniques and rapid prototyping techniques.

A technique is described hereinbefore in which a single laser device is used to achieve both the melting/sintering or other treatment of the material and to permit the Raman spectroscopy technique to be used. It will be appreciated, however, that separate laser devices may be provided to perform these functions, if desired. Where separate lasers are used, it will be appreciated that only the laser used in the Raman spectroscopy technique need be of monochromatic output.

The term 'additive layer manufacturing' as used herein is intended to cover a range of manufacturing or production techniques in which a product is built up in layers. It will be understood that a number of other terms are used to describe or refer to such techniques, and the use of the term 'additive layer manufacturing' herein is not intended to restrict the scope of the application in this regard.

Although in the illustrated arrangement the radiation from the laser is incident directly upon the workpiece, and the scattered light is incident directly upon the spectrometer device, it will be appreciated that various forms of waveguide could be located therebetween, if desired. For example it may be desirable to direct the laser light to the workpiece via an optical fibre. However, it will be appreciated that other arrangements are also possible.

A range of Raman spectroscopy techniques are known and it will be appreciated that any of these techniques may be used in accordance with the invention. Some of the Raman techniques involving two or more lasers, and it will be appreciated that the fact that more than one laser is used does not result in such arrangements falling outside of the scope of the invention. Further, although Raman techniques are described hereinbefore it will be appreciated that the use of other vibrational spectroscopy techniques also fall within the scope of the invention. For example, near infrared techniques may be used. Where near infrared techniques are used, a plurality of different frequencies of light are directed onto the workpiece rather than the monochromatic arrangement used in the Raman technique outlined in the arrangement described with reference to the drawing.

A number of other modifications and alterations may be made to the techniques described hereinbefore without departing from the scope of the invention.

## Claims

1. An additive layer manufacturing method comprising applying a material, locally treating the applied material by irradiation of a part thereof using a laser (18), monitoring a characteristic of the said part of the treated applied material using a vibrational spectroscopy technique, using the output of the monitoring operation in controlling the further treatment of the said part of the applied material, applying and locally treating at least further material, and removing untreated material from the treated material.

2. A method according to Claim 1, wherein the treatment step involve heating the material to cause localised melting/sintering thereof.

3. A method according to Claim 1, wherein the treatment step involves illuminating the material to cause localised curing thereof.

4. A method according to any of Claims 1 to 3, wherein the treatment step is undertaken using the same laser as that used in the vibrational spectroscopy technique.

5. A method according to any of Claims I to 3, wherein a separate laser (22) is used in the treatment step to that used in the vibrational spectroscopy technique.

6. A method according to any of the preceding claims, wherein the vibrational spectroscopy technique comprises a Raman spectroscopy technique, and the applied material comprises a strong Raman scatterer material.

7. A method according to Claim 6, wherein the strong Raman scatterer material comprises at least one of a polymeric or ceramic material, or a biological material.

8. A method according to Claim 6, wherein the strong Raman scatterer material comprises a weak Raman scatterer material which has been doped with a strong Raman scatterer material.

9. A method according to Claim 8, wherein the weak Raman scatterer material comprises a metallic material.

10. A method according to any of the preceding claims further comprising a step of, after treatment of the applied material, using a further vibrational spectroscopy technique to sense characteristics of the applied material with the laser operating at a reduced power.

11. An apparatus for use in the method of any of the preceding claims, the apparatus including a treatment laser (18) operable to treat a part of an applied material, a vibrational spectrometer arrangement (22) operable to monitor the said part of the applied material, and including further a control arrangement (20) operable to control further treatment of the said part by the treatment laser (18) using the output of the spectrometer arrangement (22).

12. An apparatus according to Claim 11, wherein the treatment laser (18) forms part of the spectrometer arrangement (22).

13. An apparatus according to Claim 11, wherein the spectrometer arrangement (22) incorporate a second laser independent of the treatment laser (18).

14. An apparatus according to any of Claims 11 to 13, wherein the material comprises a strong Raman scatterer material, and the vibration spectrometer arrangement comprises a Raman spectrometer arrangement.

## Patentansprüche

1. Additives schichtweises Herstellungsverfahren umfassend das Aufbringen eines Materials, das lokale Behandeln des aufgebrachten Materials durch Bestrahlen eines Teils davon unter Anwendung eines Lasers (18), das Überwachen einer charakteristischen Eigenschaft des Teils des behandelten aufgebrachten Materials unter Anwendung einer Vibrationsspektroskopietechnik, das Benutzen des Arbeitsergebnisses des Überwachungsvorgangs zum Regulieren der weiteren Behandlung des Teils des aufgebrachten Materials, das Aufbringen und lokale Behandeln mindestens eines weiteren Materials und das Entfernen von unbehandeltem Material von dem behandelten Material.

2. Verfahren nach Anspruch 1, wobei der Behandlungsschritt das Erhitzen des Materials involviert, um lokalisiertes Schmelzen/Sintern davon zu verursachen.

3. Verfahren nach Anspruch 1, wobei der Behandlungsschritt das Beleuchten des Materials involviert, um lokalisiertes Aushärten davon zu verursachen.

4. Verfahren nach einem der Ansprüche 1 bis 3, wobei der Behandlungsschritt unter Anwendung desselben Lasers wie derjenige, der bei der Vibrationsspektroskopietechnik verwendet wird, durchgeführt wird.

5. Verfahren nach einem der Ansprüche 1 bis 3, wobei ein anderer Laser (22) im Behandlungsschritt verwendet wird als derjenige, der bei der Vibrationsspektroskopietechnik verwendet wird.

6. Verfahren nach einem der vorhergehenden Ansprüche, wobei die Vibrationsspektroskopietechnik eine Raman-Spektroskopietechnik umfasst und das aufgebrachte Material ein starkes Raman-Streuermaterial umfasst.

7. Verfahren nach Anspruch 6, wobei das starke Raman-Streuermaterial mindestens eines von einem polymeren oder Keramikmaterial oder ein biologisches Material umfasst.

8. Verfahren nach Anspruch 6, wobei das starke Raman-Streuermaterial ein schwaches Raman-Streuermaterial umfasst, das mit einem starken Raman-Streuermaterial dotiert worden ist.

9. Verfahren nach Anspruch 8, wobei das schwache Raman-Streuermaterial ein Metallmaterial umfasst.

10. Verfahren nach einem der vorhergehenden Ansprüche, das des Weiteren einen Schritt des Anwendens nach der Behandlung des aufgebrachten Materials einer weiteren Vibrationsspektroskopietechnik umfasst, um die charakteristischen Eigenschaften des aufgebrachten Materials wahrzunehmen, wobei der Laser mit reduzierter Energie arbeitet.

11. Apparat zur Verwendung bei dem Verfahren nach einem der vorhergehenden Ansprüche, wobei der Apparat einen Behandlungslaser (18), der betriebsfähig ist, um einen Teil des aufgebrachten Materials zu behandeln, eine Vibrationsspektrometeranordnung (22), die betriebsfähig ist, um den Teil des aufgebrachten Materials zu überwachen, umfasst und eine weitere Regulieranordnung (20) umfasst, die betriebsfähig ist, um die weitere Behandlung des Teils durch den Behandlungslaser (18) unter Anwendung des Arbeitsergebnisses der Spektrometeranordnung (22) zu regulieren.

12. Apparat nach Anspruch 11, wobei der Behandlungslaser (18) Teil der Spektrometeranordnung (22) bildet.

13. Apparat nach Anspruch 11, wobei in die Spektrometeranordnung (22) ein zweiter Laser unabhängig von dem Behandlungslaser (18) eingearbeitet ist.

14. Apparat nach einem der Ansprüche 11 bis 13, wobei das Material ein starkes Raman-Streuermaterial umfasst und die Vibrationsspektrometeranordnung eine Raman-Spektrometeranordnung umfasst.

## Revendications

1. Procédé de fabrication par couche additive comprenant l'application d'un matériau, le traitement localement du matériau appliqué par irradiation d'une partie de celui-ci en utilisant un laser (18), la surveillance d'une caractéristique de ladite partie du matériau appliqué traité en utilisant une technique de spectroscopie vibrationnelle, l'utilisation des données de sortie de l'opération de surveillance dans le contrôle du traitement supplémentaire de ladite partie du matériau appliqué, l'application et le traitement localement au moins du matériau supplémentaire, et l'élimination du matériau non traité du matériau traité.

2. Procédé selon la revendication 1, l'étape de traitement impliquant le chauffage du matériau pour entraîner sa fusion/son frittage localisé.

3. Procédé selon la revendication 1, l'étape de traitement impliquant l'illumination du matériau pour entraîner son durcissement localisé.

4. Procédé selon l'une quelconque des revendications 1 à 3, l'étape de traitement étant entreprise en utilisant le même laser que celui utilisé dans la technique de spectroscopie vibrationnelle.

5. Procédé selon l'une quelconque des revendications 1 à 3, un laser séparé (22) étant utilisé dans l'étape de traitement par rapport à celui employé dans la technique de spectroscopie vibrationnelle.

6. Procédé selon l'une quelconque des revendications précédentes, la technique de spectroscopie vibrationnelle comprenant une technique de spectroscopie Raman, et le matériau appliqué comprenant un matériau à forte dispersion Raman.

7. Procédé selon la revendication 6, le matériau à forte dispersion Raman comprenant au moins l'un parmi un matériau polymère ou un matériau type céramique, ou un matériau biologique.

8. Procédé selon la revendication 6, le matériau à forte dispersion Raman comprenant un matériau à faible dispersion Raman qui a été dopé avec un matériau à forte dispersion Raman.

9. Procédé selon la revendication 8, le matériau à faible dispersion Raman comprenant un matériau métallique.

10. Procédé selon l'une quelconque des revendications précédentes, comprenant en outre une étape de, après traitement du matériau appliqué, utilisation d'une technique supplémentaire de spectroscopie vibrationnelle pour capter les caractéristiques du matériau appliqué avec le laser fonctionnant à une puissance réduite.

11. Appareil pour l'utilisation dans le procédé selon l'une quelconque des revendications précédentes, l'appareil incluant un laser de traitement (18) pouvant fonctionner pour traiter une partie d'un matériau appliqué, une configuration de spectromètre vibrationnel (22) pouvant fonctionner pour surveiller ladite partie du matériau appliqué et incluant en outre un dispositif de commande (20) pouvant fonctionner pour contrôler le traitement supplémentaire de ladite partie par le laser de traitement (18) en utilisant les données de sortie de la configuration de spectromètre (22).

12. Appareil selon la revendication 11, le laser de traitement (18) constituant une partie de la configuration de spectromètre (22).

13. Appareil selon la revendication 11, la configuration de spectromètre (22) incorporant un second laser indépendant du laser de traitement (18).

14. Appareil selon l'une quelconque des revendications 11 à 13, le matériau comprenant un matériau à forte dispersion Raman, et la configuration de spectromètre vibrationnel comprenant une configuration de spectromètre Raman.
